# EUROPEAN PATENT SPECIFICATION

(11) **EP 3 736 947 B1**
(45) Date of publication and mention of the grant of the patent: **26.01.2022**
(21) Application number: 18897895.1
(22) Date of filing: 26.12.2018
(51) Int. Cl.: H02K 5/10, B62D 5/04, H02K 5/22, H02K 11/33

(54) **MOTOR UNIT AND ELECTRIC POWER STEERING DEVICE**
MOTOREINHEIT UND ELEKTRISCHE SERVOLENKUUNG
UNITÉ DE MOTEUR ET DISPOSITIF DE DIRECTION ASSISTÉE ÉLECTRIQUE

(30) Priority: 04.01.2018 JP 2018000220
(43) Date of publication of application: 11.11.2020
(73) Proprietor: NSK LTD., Shinagawa-Ku Tokyo 141-8560 (JP)
(72) Inventor: KANEKO, Noboru, Tokyo 141-8560 (JP); SHIMIZU, Yasuhiro, Tokyo 141-8560 (JP); TU, Zhipeng, Tokyo 141-8560 (JP)
(74) Representative: SSM Sandmair
(86) International application number: PCT/JP2018/047743
(87) International publication number: WO 2019/135377

(56) References cited:
- EP-A1- 1 920 992
- EP-A1- 2 481 654
- EP-B1- 2 481 654
- WO-A1-2007/026894
- JP-A- 2006 103 567
- JP-A- 2006 103 567
- JP-A- 2009 040 353
- JP-A- 2009 040 353
- JP-A- 2009 046 050
- JP-A- 2014 181 463
- US-A1- 2014 292 128
- US-A1- 2015 334 854

## Description

### Field

The present invention relates to an electric power steering device.

### Background

An electric power steering device includes a motor and a control unit that controls the motor. An electric power steering device, in which a control unit is disposed in the vicinity of a motor in order to achieve downsizing, has been known. For example, Patent Literature 1 discloses an example of an electric power steering device in which a control unit is disposed in the vicinity of a motor. In such an electric power steering device, the control unit is fixed to a motor flange arranged at one end of the motor in many cases. The motor and the control unit are electrically connected to each other using bus bars disposed in the motor flange.

### Citation List

### Patent Literature

Patent Literature 1: Japanese Patent Application Laid-open No. 2013-150506

EP 2 481 654 A1 relates to an electric power steering device. An electric motor and a control unit are juxtaposed in a speed reduction gear box. A terminal block is provided at an outer circumference of a flange proximate to a control unit of the electric motor. Terminal block surfaces of the terminal block are provided so that a plane direction faces a direction vertical to a shaft line of the electric motor. A motor side connecting terminal is held on the terminal block surface. The unit side connecting terminals provided at a position proximate to the electric motor of the control unit are arranged so as to overlap with the motor side connecting terminal on the terminal block surface to couple by a coupling portion (fixing screw).

EP 1 920 992 A1 relates to an electric power steering device. An electric power steering apparatus according to the invention includes an electric motor to be connected to a control unit through bus bars respectively projected from the inside of the electric motor and is structured such that the control unit controls the drive of the electric motor to thereby assist the steering of a vehicle. The control unit is fixed to a fixing base which is structured as a composing element of the electric motor, and the fixing base covers the connecting portion between the bus bars and control unit.

US 2014/0292128 A1 relates to a cover structure in motor. A cover structure in a motor may include a rotor, a stator having a drive coil, a connector provided so that an engaging connector is engaged in a rotation shaft direction of the rotor, a main body cover covering outer peripheries of the stator and the connector and integrally formed with a connector cover, coil terminals extended from the stator to an outer side, connector terminals supported by a terminal support part integrally formed with the connector cover and are extended at a position offset from the coil terminals in the rotation shaft direction, and a wall part which is provided on a radially inner side of the terminal support part along the connector terminals. The wall part is located on an outer side in the radial direction with respect to the coil terminals, and a space is formed on a radially inner side of the wall part.

US 2015/0334854 A1 relates to a vehicle-mounted electronic control device. Provided is a vehicle-mounted electronic control device including a control unit reduced in size, weight, and costs with improved contact reliability between electric components included in the control unit. In the vehicle-mounted electronic control device, a connector has a locking hole formed in a side surface relative to an upper surface that is an upward oriented surface, a fitting opening formed in a lower surface, and a waterway for preventing flowing down water from entering the locking hole and the fitting opening, which is formed on a surface of the connector.

JP 2009-040353 A relates to an electric power steering device. This electric power steering device comprises an electric motor for giving steering auxiliary torque to a steering system of a vehicle and a control unit having an electronic circuit for controlling drive of the electric motor. The control unit houses the electronic circuit with a case and a cover to be fitted to the case, and one or both of fitting faces of the case and the cover are formed with grooves.

JP 2006-103567 A relates to a steering device. The steering device is provided on a lower portion in the longitudinal direction of a steering column, and has a housing to store a circuit substrate. The housing includes a body having an opening which opens downward, and a lid to close the opening of the body. An inclined receiving part to receive water droplets moving obliquely downward along the longitudinal direction of the steering column at the position separate from a lower surface as a mating face of an edge of the opening with the lid and allows the water droplets to flow obliquely in the downstream side is formed in the body. The water droplets are received by the receiving part separate from the mating face, and flow obliquely in the downstream side, preventing ingress of water droplets. The receiving part is formed in the existing housing at low cost.

### Summary

### Technical Problem

In the meantime, foreign matter may fall around the motor and the control unit. If the foreign matter comes into contact with the bus bars, a short circuit may occur. Thus, a technique to prevent the foreign matter from coming into contact with the bus bars has been desired.

The present disclosure is made in view of the problem described above, and aims to provide an electric power steering device capable of preventing foreign matter from coming into contact with bus bars.

### Solution to Problem

In order to achieve the above-mentioned object, there is provided an electric power steering device according to claim 1.

Advantageous embodiments are defined by the dependent claims.

Consequently, foreign matter that has dropped from the members that are located on the upper side of the motor unit between the motor case and the control unit case is caught by the first cover or the second cover. Foreign matter that adheres to the surface of the motor case is caught by the first cover. Foreign matter that adheres to the surface of the control unit case is caught by the second cover. The foreign matter caught by the first cover is led by the groove to a position where it does not fall on the bus bars, and drops on the underside. The foreign matter caught by the second cover is moved to the first cover that is located on the underside of the second cover, and is then led by the groove to the position where it does not fall on the bus bars, and drops on the underside. As a result, the motor unit is capable of preventing the foreign matter from coming into contact with the bus bars.

As a preferable aspect of the motor unit, the first cover includes a protrusion at the end of the groove, the protrusion projecting toward the underside. This makes liquid hard to run down the surface on the underside of the first cover, thereby preventing the liquid from entering the interior of the electric motor.

As a preferable aspect of the motor unit, a width of the groove in a widthwise direction becomes narrower toward the upper side in at least part of the groove. This makes foreign matter that has entered the groove hard to overflow from the groove, thereby further preventing the foreign matter from coming into contact with the bus bars.

As a preferable aspect of the motor unit, a length of the first cover in an arrangement direction in which a plurality of the bus bars are arrayed is longer than a maximum distance from one of the bus bars at one end to another one of the bus bars at the other end in the arrangement direction. This makes foreign matter harder to fall on the bus bars. The motor unit is capable of further preventing the foreign matter from coming into contact with the bus bars.

An electric power steering device according to another aspect of the present disclosure includes the motor unit. Consequently, the electric power steering device is capable of reducing the possibility of a malfunction caused by foreign matter.

As a preferable aspect, the electric power steering device includes: a steering shaft that rotates around a rotation axis that forms a predetermined angle with a horizontal plane; and a steering column that supports the steering shaft. The steering column is attached to a vehicle body in such a manner that the predetermined angle can be changed. The motor unit is attached to the steering column. The lengthwise direction of the groove is along a direction parallel to the rotation axis. In a vertical section along the lengthwise direction of the groove, the bottom of the groove forms an angle with the horizontal plane in a state in which the predetermined angle is a maximum angle and in a state in which the predetermined angle is a minimum angle.

Consequently, foreign matter that has entered the groove is led to the ends of the groove regardless of the angle that the steering shaft forms with the horizontal plane. This makes the foreign matter hard to accumulate in the groove.

In the inventive electric power steering device, the first cover includes a first wall that is disposed on the motor flange side of the groove and a second wall that is disposed on the control unit side of the groove and that is higher than the first wall.

Consequently, even in a case in which the motor unit is disposed so as to be tilted relative to a designed position, foreign matter in the groove is hard to go beyond the second wall. Thus, the electric power steering device is capable of further preventing the foreign matter from coming into contact with the bus bars.

### Advantageous Effects of Invention

The present disclosure can provide a motor unit and an electric power steering device that are capable of preventing foreign matter from coming into contact with bus bars.

### Brief Description of Drawings

FIG. 1 is a schematic view of an electric power steering device according to a first embodiment not forming part of the invention.
FIG. 2 is a section view of a motor unit according to the first embodiment not forming part of the invention.
FIG. 3 is a section view of the periphery of a bus bar in the motor unit according to the first embodiment not forming part of the invention.
FIG. 4 is a perspective view of a motor according to the first embodiment not forming part of the invention.
FIG. 5 is a perspective view of the periphery of a motor flange according to the first embodiment not forming part of the invention.
FIG. 6 is a perspective view of the periphery of the motor flange according to the first embodiment not forming part of the invention.
FIG. 7 is a perspective view of the periphery of the motor flange according to the first embodiment not forming part of the invention.
FIG. 8 is a perspective view of a first cover according to the first embodiment not forming part of the invention.
FIG. 9 is a section view of the first cover according to the first embodiment not forming part of the invention.
FIG. 10 is a section view taken along line A-A in FIG. 9.
FIG. 11 is a section view of a first cover according to a first modification not forming part of the invention.
FIG. 12 is a section view of a first cover according to a second modification not forming part of the invention.
FIG. 13 is a perspective view of an electric power steering device according to a second embodiment according to the invention.
FIG. 14 is a section view of a first cover according to the second embodiment according to the invention.
FIG. 15 is a section view of the first cover according to the second embodiment in a case in which the depth direction of a groove is tilted relative to the vertical direction.
FIG. 16 is a section view taken along line B-B in FIG. 14 in a state in which a predetermined angle is at the maximum.
FIG. 17 is a section view taken along line B-B in FIG. 14 in a state in which a predetermined angle is at the minimum.

### Description of Embodiments

Description of the present invention will be given in detail below with reference to the drawings. Embodiments to be described below (hereinafter referred to as embodiments) do not limit the present invention. Constituent elements in the embodiment described below include elements that can be easily conceived of by a person skilled in the art, elements substantially equivalent thereto, and elements within a so-called range of equivalents. The constituent elements disclosed in the embodiments described below can be appropriately combined.

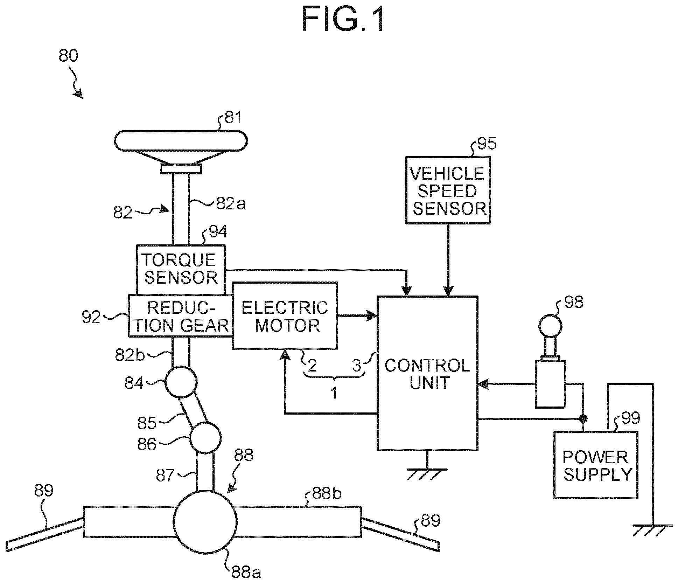

First Embodiment, which does not form part of the present invention FIG. 1 is a schematic view of an electric power steering device according to a first embodiment. As illustrated in FIG. 1, an electric power steering device 80 includes, in the order in which force applied by an operator transmits, a steering wheel 81, a steering shaft 82, a first universal joint 84, a countershaft 85, and a second universal joint 86, and is joined to a pinion shaft 87. In the following description, the front side of a vehicle in which the electric power steering device 80 is installed is simply denoted as the front side and the rear side of the vehicle is simply denoted as the rear side.

As illustrated in FIG. 1, the steering shaft 82 includes an input shaft 82a and an output shaft 82b. One end of the input shaft 82a is coupled to the steering wheel 81, and the other end of the input shaft 82a is coupled to

the output shaft 82b. One end of the output shaft 82b is coupled to the input shaft 82a, and the other end of the output shaft 82b is coupled to the first universal joint 84.

As illustrated in FIG. 1, the countershaft 85 couples the first universal joint 84 and the second universal joint 86. One end of the countershaft 85 is coupled to the first universal joint 84, and the other end of the countershaft 85 is coupled to the second universal joint 86. One end of the pinion shaft 87 is coupled to the second universal joint 86, and the other end of the pinion shaft 87 is coupled to a steering gear 88. The rotation of the steering shaft 82 is transmitted to the pinion shaft 87 through the countershaft 85. That is to say, the countershaft 85 rotates along with the steering shaft 82.

As illustrated in FIG. 1, the steering gear 88 includes a pinion 88a and a rack 88b. The pinion 88a is coupled to the pinion shaft 87. The rack 88b meshes with the pinion 88a. The steering gear 88 converts a rotational motion that has been transmitted to the pinion 88a into a translational motion in the rack 88b. The rack 88b is coupled to a tie rod 89. The angle of a wheel changes as the rack 88b moves.

As illustrated in FIG. 1, the electric power steering device 80 includes a reduction gear 92 and a motor unit 1. The reduction gear 92 is, for example, a worm reduction gear. The motor unit 1 includes an electric motor 2 and a control unit 3. Torque produced by the electric motor 2 is transmitted to a worm wheel through a worm in the interior of the reduction gear 92, thereby rotating the worm wheel. The reduction gear 92 increases the torque produced by the electric motor 2, using the worm and the worm wheel. The reduction gear 92 applies assist steering torque to the output shaft 82b. That is to say, the electric power steering device 80 is a column assist type. The control unit 3 is an electronic control unit (ECU) .

As illustrated in FIG. 1, the electric power steering device 80 includes a torque sensor 94 and a vehicle speed sensor 95. The electric motor 2, the torque sensor 94, and the vehicle speed sensor 95 are electrically connected to the control unit 3. The torque sensor 94 outputs steering torque that has been transmitted to the input shaft 82a, to the control unit 3 via controller area network (CAN) communication. The vehicle speed sensor 95 detects the traveling speed (vehicle speed) of a vehicle body in which the electric power steering device 80 is installed. The vehicle speed sensor 95 is included in the vehicle body, and outputs the vehicle speed to the control unit 3 via CAN communication.

The control unit 3 is attached to the electric motor 2, and controls operation of the electric motor 2. The control unit 3 obtains signals from each of the torque sensor 94 and the vehicle speed sensor 95. To the control unit 3, a current is supplied from a power supply 99 (a vehicle-mounted battery, for example) with an ignition switch 98 being ON. The control unit 3 calculates an assist steering command value based on the steering torque and the vehicle speed. The control unit 3 adjusts a value of the current to be supplied to the electric motor 2 based on the assist steering command value. The control unit 3 obtains information on an induced voltage from the electric motor 2 or information that is output from a resolver provided to the electric motor 2. Control of the electric motor 2 by the control unit 3 decreases force required to operate the steering wheel 81.

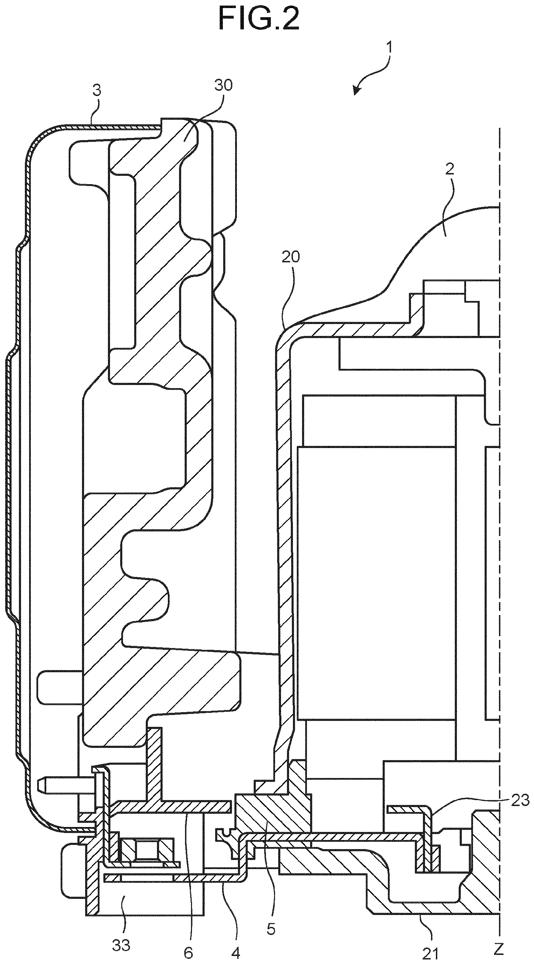

FIG. 2 is a section view of the motor unit according to the first embodiment. In FIG. 2, the upper side of a plane of paper is the upper side in the vertical direction. As illustrated in FIG. 2, a rotation axis Z of the electric motor 2 forms the angle with the horizontal plane in the first embodiment. As illustrated in FIG. 2, the motor unit 1 includes the electric motor 2, the control unit 3, three bus bars 4, a first cover 5, and a second cover 6.

In the following description, the upper side in the vertical direction is simply denoted as the upper side and the underside in the vertical direction is simply denoted as the underside. A direction parallel to the rotation axis Z is denoted as the axial direction. A direction orthogonal to the axial direction is denoted as the radial direction. A direction along a circle centered around the rotation axis Z is denoted as the circumferential direction.

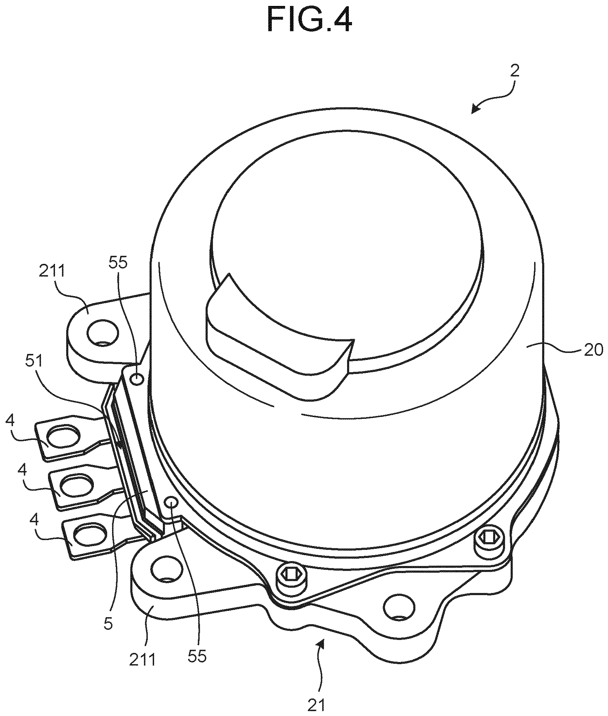

As illustrated in FIG. 2, the electric motor 2 and the control unit 3 are disposed to be close to each other in the motor unit 1. The electric motor 2 includes a motor case 20, a motor flange 21, and a terminal block 23. The motor case 20 is a member having a substantially cylindrical shape and is formed of metal, for example. The motor case 20 has, for example, a built-in rotor and stator. The rotor rotates around the rotation axis Z. A coil is wound around the stator. Three-phase alternating current is supplied to the coil. The motor flange 21 is a member that blocks an opening of one end of the motor case 20. The motor flange 21 is disposed at one end on the underside of the motor case 20. As illustrated in FIG. 4, the motor flange 21 includes two supporting parts 211 that project from the outer peripheral surface thereof. The terminal block 23 is attached to the motor flange 21. The terminal block 23 is connected to the coil and the bus bars 4. Currents from the bus bars 4 are supplied to the coil through the terminal block 23.

As illustrated in FIG. 2, the control unit 3 includes a control unit case 30 and a connector 33. The control unit case 30 is formed of metal, for example. The control unit case 30 has, for example, a built-in substrate that includes electronic components. The control unit case 30 is fixed to the motor flange 21 by, for example, fastening members such as bolts. The fastening members that fix the control unit case 30 to the motor flange 21 are attached to the supporting parts 211 of the motor flange 21. The control unit case 30 faces the motor case 20. The connector 33 is disposed at an end on the underside of the control unit case 30. The bus bars 4 are connected to the connector 33. The control unit 3 supplies a current to the electric motor 2 through the connector 33 and the bus bars 4.

The bus bar 4 is a conductor that connects the electric motor 2 and the control unit 3. For example, the bus bar 4 is formed of metal. One end of the bus bar 4 is connected to the terminal block 23 of the electric motor 2. The other end of the bus bar 4 is connected to the connector 33 of the control unit 3. The bus bar 4 projects from the motor case 20 toward the connector 33. Thus, the bus bar 4 includes a part that is not covered by the motor case 20 and the connector 33.

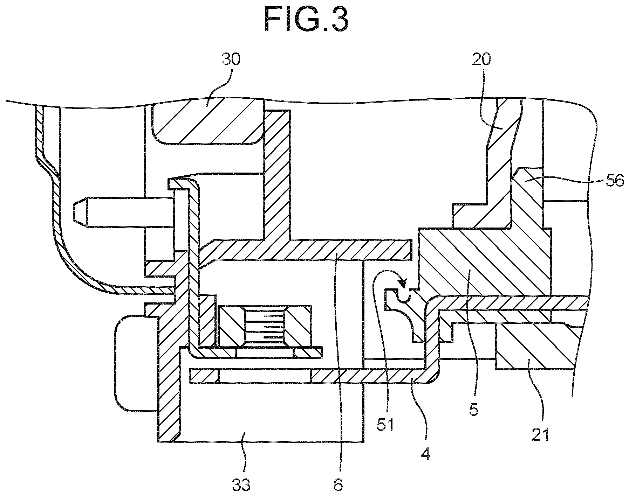

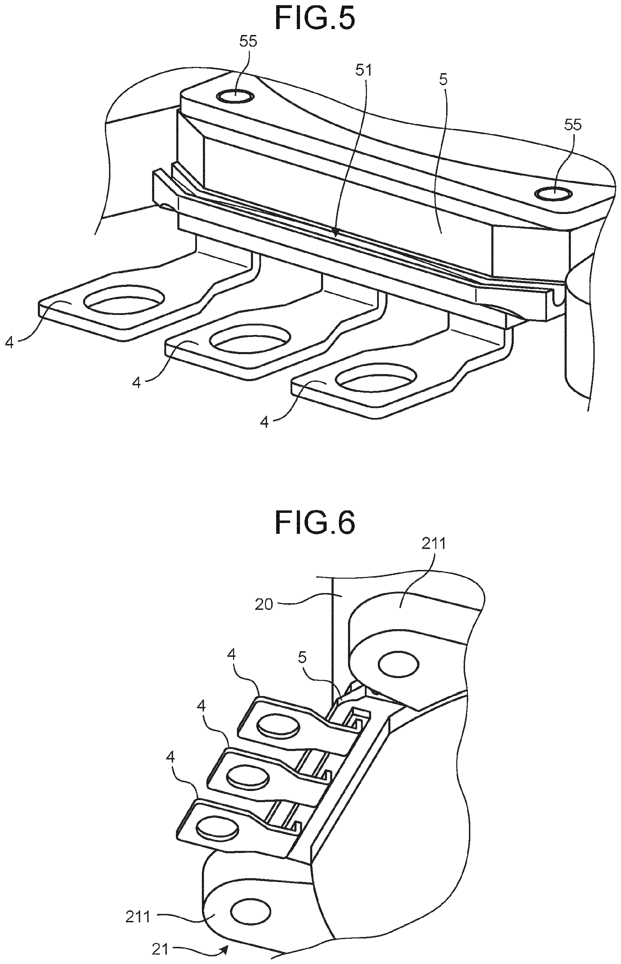

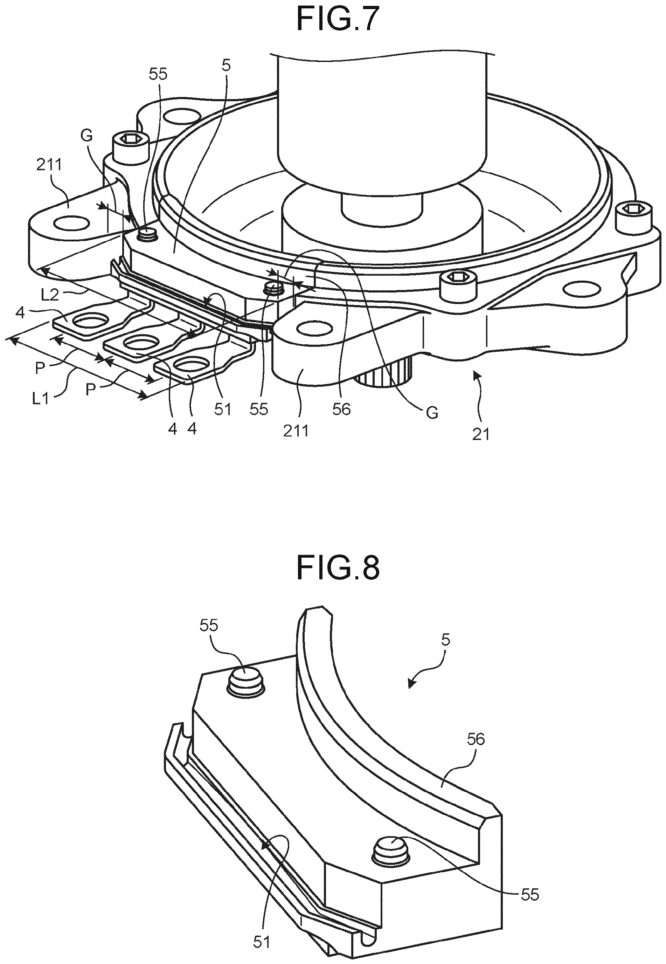

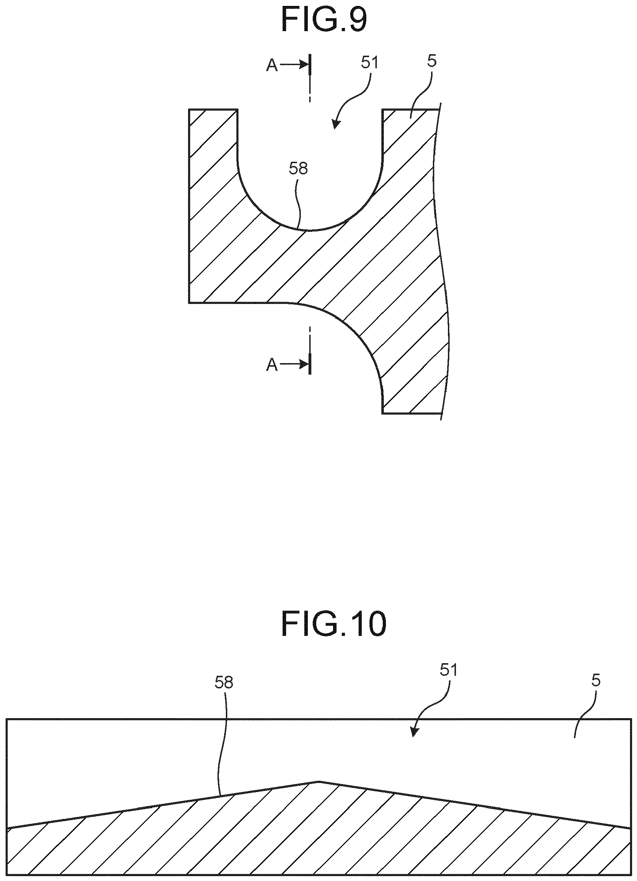

FIG. 3 is a section view of the periphery of the bus bar in the motor unit according to the first embodiment. FIG.4 is a perspective view of the motor according to the first embodiment. FIG. 5 is a perspective view of the periphery of the motor flange according to the first embodiment. FIG. 6 is a perspective view of the periphery of the motor flange according to the first embodiment. FIG. 7 is a perspective view of the periphery of the motor flange according to the first embodiment. FIG. 8 is a perspective view of the first cover according to the first embodiment. FIG. 9 is a section view of the first cover according to the first embodiment. FIG. 10 is a section view taken along line A-A in FIG. 9.

As illustrated in FIG. 4, the first cover 5 is attached to the motor case 20 of the electric motor 2. The first cover 5 is an insulator and formed of a resin, for example. Examples of the resin used for the first cover 5 include a polybutylene terephthalate (PBT) resin, for example. The first cover 5 and the bus bars 4 are integrally formed. For example, the first cover 5 and the three bus bars 4 are formed integrally by means of insert molding. The first cover 5 covers at least part of the surface on the upper side of each bus bar 4. The length of the first cover 5 in the arrangement direction in which the three bus bars 4 are arrayed (the depth direction of the page in FIG. 3) is longer than the maximum distance from the bus bar 4 at one end to the bus bar 4 at the other end in the arrangement direction. That is to say, as illustrated in FIG. 7, a length L2 of the first cover 5 in the arrangement direction is longer than a maximum distance L1 from the bus bar 4 at one end to the bus bar 4 at the other end in the arrangement direction. Thus, the ends of the first cover 5 in the arrangement direction do not overlap with the bus bars 4 in the axial direction. As illustrated in FIG. 7, the first cover 5 is disposed between the two supporting parts 211 of the motor flange 21. A gap length G between an end of the first cover 5 and each of the supporting parts 211 in the circumferential direction is equal to or less than a center-to-center distance (pitch) P between the adjacent bus bars 4 in the arrangement direction. As a result, the first cover 5 is disposed close to the supporting parts 211 that are portions connecting the control unit case 30 and the motor flange 21. The first cover 5 is prevented from being mispositioned with respect to the control unit case 30, so that the bus bars 4 are prevented from being deformed. As illustrated in FIG. 8, the first cover 5 includes convex parts 55, a wall 56, and a groove 51.

As illustrated in FIG. 8, the convex parts 55 are members having a substantially columnar shape that project from the surface on the upper side of the first cover 5. As illustrated in FIG. 5, the convex parts 55 fit into respective holes provided in the motor case 20. The convex parts 55 position the first cover 5 with respect to the motor case 20.

As illustrated in FIG. 8, the wall 56 projects from the surface on the upper side of the first cover 5. The wall 56 is disposed on the inner side of the convex parts 55 in the radial direction. The wall 56 has a shape along the inner peripheral surface of the motor case 20, and fits in the inside of the motor case 20, as illustrated in FIG. 3.

As illustrated in FIG. 8, the groove 51 is arranged on the surface on the upper side of the first cover 5. The groove 51 opens toward the upper side. The groove 51 bends and extends along the circumferential direction. The groove 51 includes two bent parts. The groove 51 is present along the entire length of the first cover 5 in the arrangement direction mentioned above. The ends of the groove 51 in the lengthwise direction open on the side faces of the first cover 5. The groove 51 may also be called a drain ditch.

FIG. 9 is a section view in which the first cover 5 is cut on a plane including the rotation axis Z. In the section illustrated in FIG. 9, a bottom 58 of the groove 51 is semicircular. As illustrated in FIG. 10, the bottom 58 of the groove 51 is tilted in such a manner that the ends of the groove 51 in the lengthwise direction are positioned on the underside of the center thereof. The bottom 58 of the groove 51 is tilted in such a manner as to be away from the motor case 20 from the center toward the ends of the groove 51 in the lengthwise direction. In the first embodiment, the surface on the upper side of the first cover 5 has a planar shape orthogonal to the axial direction, so that the groove 51 becomes deeper from the center toward the ends of the groove 51 in the lengthwise direction. The surface of the groove 51 is coated to enhance water repellency. For example, the surface of the groove 51 is coated with fluoroplastics. In other words, the first cover 5 includes a covering material to enhance water repellency on the surface of the groove 51.

As illustrated in FIG. 3, the second cover 6 is attached to the control unit case 30 of the control unit 3. The second cover 6 is an insulator and formed of a resin, for example. Examples of the resin used for the second cover 6 include a polybutylene terephthalate resin, for example. The second cover 6 is positioned on the upper side of the connector 33. The second cover 6 overlaps with the groove 51 of the first cover 5 in the axial direction. The second cover 6 overlaps with the upper side of the groove 51. The length of the second cover 6 in the arrangement direction mentioned above is longer than the maximum distance from the bus bar 4 at one end to the bus bar 4 at the other end in the arrangement direction. Thus, the ends of the second cover 6 in the arrangement direction do not overlap with the bus bars 4 in the axial direction.

The shapes and materials of the first cover 5 and the second cover 6 are not limited to those mentioned above. For example, the bottom 58 of the groove 51 does not necessarily have to be tilted. The bottom 58 of the groove 51 does not have to have a curved surface, and may have a planar shape. Alternatively, the surface on the upper side of the second cover 6 may be tilted in such a manner that the end thereof closer to the electric motor 2 (the end on the inner side in the radial direction) is positioned on the underside of the end thereof farther from the electric motor 2 (the end on the outer side in the radial direction).

The first cover 5 does not have to be formed integrally with the bus bars 4, and there may be gaps between the first cover 5 and the bus bars 4. In this case, the first cover 5 does not have to be an insulator, and may be formed of metal, for example. In a case in which the first cover 5 and the bus bars 4 are disposed separately, the first cover 5 can be attached by performing processing on an existing motor case and the like.

The number of the groove 51 that the first cover 5 includes may be two or more. In this case, the second cover 6 only has to overlap with the upper side of at least one of the grooves 51. The second cover 6 may also have a groove.

The number of the bus bars 4 is not necessarily three. For example, in a case in which the electric motor 2 has two systems of three-phase alternating current, the number of the bus bars 4 is six. The six bus bars 4 are arrayed in one direction. The direction in which the six bus bars 4 are arrayed is the arrangement direction. In this case, the maximum distance L1 mentioned above means the maximum distance from the bus bar 4 at one end to the bus bar 4 at the other end, of the six bus bars 4, in the arrangement direction.

As described above, the motor unit 1 includes the electric motor 2, the control unit 3, the bus bars 4, the first cover 5, and the second cover 6. The electric motor 2 includes the motor case 20 and the motor flange 21 that is disposed at one end of the motor case 20. The control unit 3 includes the control unit case 30 facing the motor case 20 and is supported by the electric motor 2. The bus bars 4 project from the motor flange 21 toward the control unit 3 and connect the electric motor 2 and the control unit 3. The first cover 5 is attached to the electric motor 2 and covers at least part of the surface on the upper side of each bus bar 4. The second cover 6 is attached to the control unit case 30. The first cover 5 includes the groove 51 that opens toward the upper side. The second cover 6 overlaps with the upper side of the groove 51.

Condensation may occur on members that are located on the upper side of the motor unit 1, or the motor case 20 and the control unit case 30. Droplets drip onto the underside by gravitation. That is to say, droplets drip toward the motor flange 21 and the connector 33. In addition to water, oil, dust, or the like may drop toward the motor flange 21 and the connector 33. That is to say, foreign matter drops toward the motor flange 21 and the connector 33. Adherence of foreign matter, such as water, oil, and dust to the bus bars 4 is not preferable because it may cause a short circuit. Furthermore, it is not easy to find foreign matter because components are congested around the motor flange 21 in order to downsize the motor unit 1.

On the contrary, in the motor unit 1 of the first embodiment, foreign matter that has dropped from the members that are located on the upper side of the motor unit 1 between the motor case 20 and the control unit case 30 is caught by the first cover 5 or the second cover 6. Foreign matter that adheres to the surface of the motor case 20 is caught by the first cover 5. Foreign matter that adheres to the surface of the control unit case 30 is caught by the second cover 6. The foreign matter caught by the first cover 5 is led by the groove 51 to a position where it does not fall on the bus bars 4, and drops on the underside. The foreign matter caught by the second cover 6 is moved to the first cover 5 that is located on the underside of the second cover 6, and is then led by the groove 51 to the position where it does not fall on the bus bars 4, and drops on the underside. As a result, the motor unit 1 is capable of preventing foreign matter from coming into contact with the bus bars 4.

In the motor unit 1, the bottom 58 of the groove 51 is tilted in such a manner that the ends of the groove 51 in the lengthwise direction are positioned on the underside of the center thereof. In this manner, foreign matter that has entered the groove 51 is led easily to the ends of the groove 51. This makes the foreign matter hard to accumulate in the groove 51.

In the motor unit 1, the first cover 5 is an insulator. The bus bars 4 and the first cover 5 are integrally formed. As a result, the motor unit 1 can be downsized.

In the motor unit 1, the length L2 of the first cover 5 in the arrangement direction in which the bus bars 4 are arrayed is longer than the maximum distance L1 from the bus bar 4 at one end to the bus bar 4 at the other end in the arrangement direction. This makes it harder for foreign matter to fall on the bus bars 4. The motor unit 1 is capable of further preventing the foreign matter from coming into contact with the bus bars 4.

The electric power steering device 80 includes the motor unit 1. As a result, the electric power steering device 80 is capable of reducing the possibility of a malfunction caused by foreign matter.

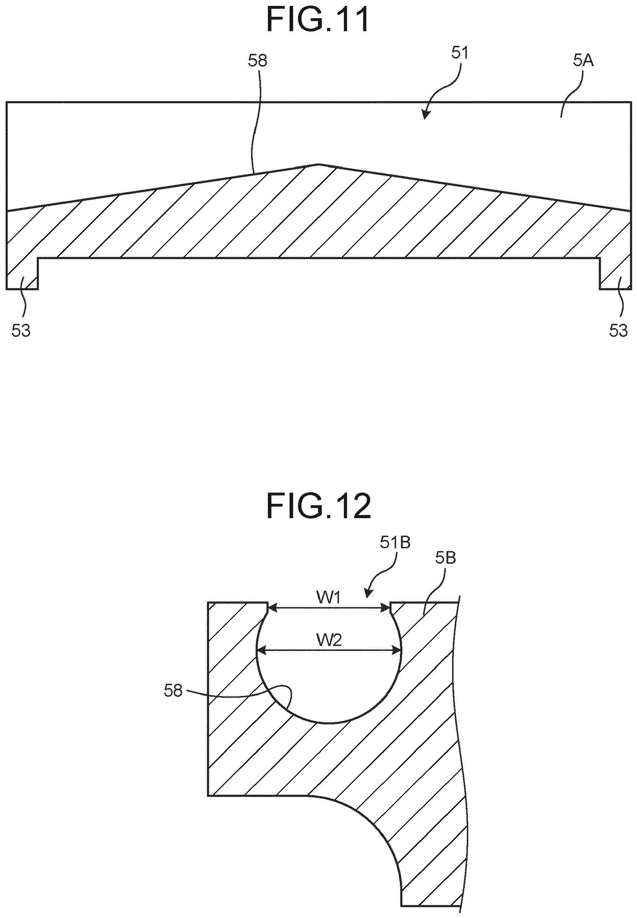

First Modification, which does not form part of the present invention FIG. 11 is a section view of a first cover according to a first modification. Note that the same components as those described in the first embodiment mentioned above are given the same reference signs, and that description thereof is omitted.

As illustrated in FIG. 11, a first cover 5A of the first modification includes protrusions 53 at the ends of the groove 51. The protrusions 53 project from the backside of the surface on which the groove 51 is provided (the surface on the underside). The protrusions 53 project toward the underside. The protrusions 53 may also be called water-dripping parts. The shape of the protrusions 53 is not limited to the shape illustrated in FIG. 11. The protrusions 53 only need to have such a shape as to stop liquid that drips from the ends of the groove 51 from running down the surface on the underside of the first cover 5A.

According to the first modification, liquid is hard to run down the surface on the underside of the first cover 5A. As a result, the liquid is prevented from entering the interior of the electric motor 2.

Second Modification, which does not form part of the present invention FIG. 12 is a section view of a first cover according to a second modification. Note that the same components as those described in the first embodiment mentioned above are given the same reference signs, and that description thereof is omitted.

A first cover 5B of the second modification includes a groove 51B. A width W1 between the upper ends of the groove 51B in the widthwise direction of the groove 51B is narrower than a maximum width W2 of the groove 51B in the widthwise direction. That is to say, the width in the widthwise direction becomes narrower toward the upper side in part of the groove 51B.

According to the second modification, foreign matter that has entered the groove 51B is hard to overflow from the groove 51B. As a result, the foreign matter is further prevented from coming into contact with the bus bars 4.

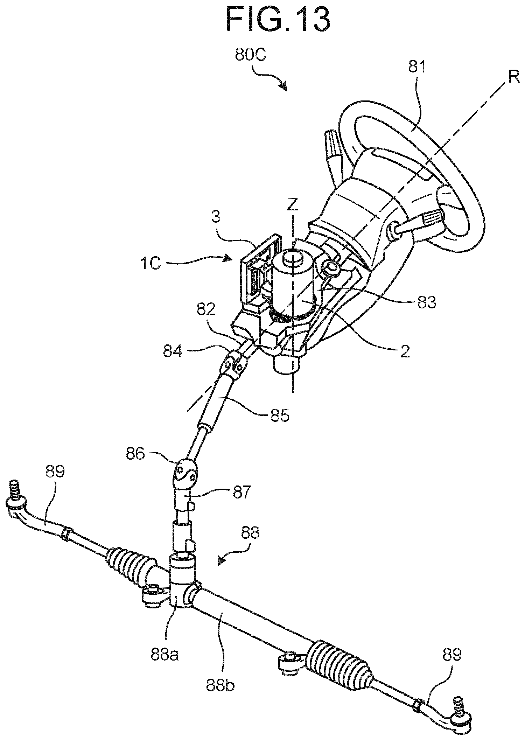

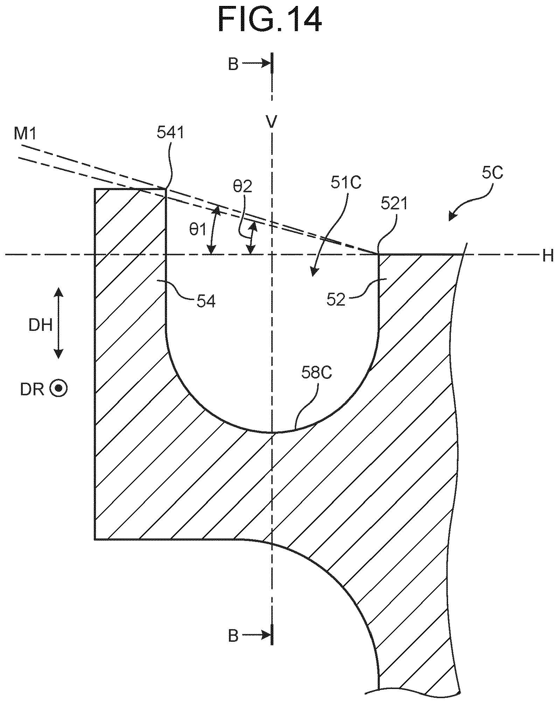

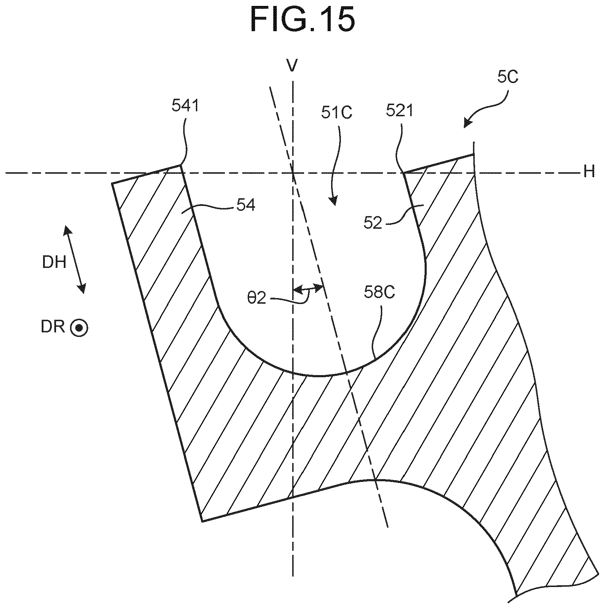

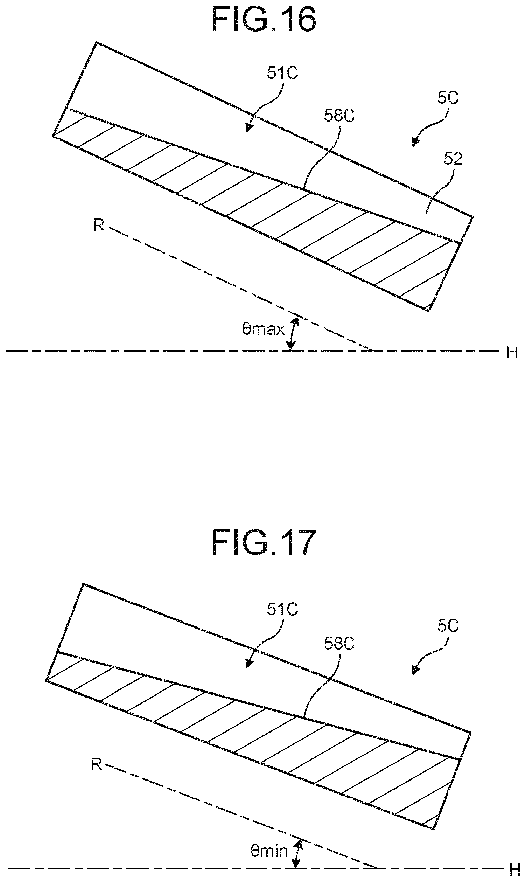

Second Embodiment, which is according to the present invention FIG. 13 is a perspective view of an electric power steering device according to a second embodiment. FIG. 14 is a section view of a first cover according to the second embodiment. FIG. 15 is a section view of the first cover according to the second embodiment in a case in which the depth direction of a groove is tilted relative to the vertical direction. FIG. 16 is a section view taken along line B-B in FIG. 14 in a state in which a predetermined angle is at the maximum. FIG. 17 is a section view taken along line B-B in FIG. 14 in a state in which a predetermined angle is at the minimum. Note that the same components as those described in the first embodiment mentioned above are given the same reference signs, and that description thereof is omitted.

As illustrated in FIG. 13, an electric power steering device 80C of the second embodiment includes a steering column 83 and a motor unit 1C. The steering column 83 is a member that supports the steering shaft 82. The steering shaft 82 can rotate around a rotation axis R. The steering column 83 supports the steering shaft 82 in such a manner that the steering shaft 82 can rotate around the rotation axis R. For example, the steering column 83 supports the steering shaft 82 through a bearing. The rotation axis R forms a predetermined angle with the horizontal plane.

The steering column 83 is attached to the vehicle body in such a manner that the predetermined angle that the rotation axis R forms with the horizontal plane can be changed. That is to say, the steering column 83 is attached to the vehicle body swingably. For example, the steering column 83 is attached to the vehicle body through a pivot bracket. In the electric power steering device 80C, a tilt position can be adjusted. For example, the maximum value of the predetermined angle is 25°. The minimum value of the predetermined angle is 21°. That is to say, the predetermined angle is 23° in a state in which the steering column 83 is at a neutral position. The steering column 83 is capable of moving in a range from -2° to +2° inclusive from the neutral position. The neutral position is a midpoint position between the position at which the predetermined angle reaches the maximum value and the position at which the predetermined angle is minimized.

As illustrated in FIG. 13, a motor unit 1C is attached to the top face of the steering column 83. For example, the motor unit 1C is attached to the steering column 83 in such a manner that the rotation axis Z of the electric motor 2 is orthogonal to the rotation axis R of the steering shaft 82.

In the motor unit 1C, a first cover 5C includes a groove 51C, a first wall 52, and a second wall 54. The groove 51C is in line with a direction DR parallel to the rotation axis R. The first wall 52 and the second wall 54 are members that constitute the groove 51C. The first wall 52 is disposed on the motor flange 21 (see FIG. 2) side of the groove 51C. The second wall 54 is disposed on the control unit 3 (see FIG. 2) side of the groove 51C. The second wall 54 is higher than the first wall 52 in a depth direction DH of the groove 51C.

FIG. 14 is a view illustrating a state in which the depth direction DH of the groove 51C is parallel to a reference line V. The reference line V is a straight line parallel to the rotation axis Z of the electric motor 2. In the state illustrated in FIG. 14, the straight line passing through an edge 521 of the first wall 52 that faces the groove 51C and an edge 541 of the second wall 54 that faces the groove 51C is a straight line M1. The straight line M1 forms a first angle θ1 with a horizontal plane H. The first angle θ1 is equal to or more than a predetermined second angle θ2. The second angle θ2 is, for example, 15°. As a result, even in a case in which the depth direction DH of the groove 51C is tilted relative to the reference line V, the edge 541 is positioned on the upper side of the edge 521, as illustrated in FIG. 15.

As illustrated in FIG. 16, in the vertical section along the lengthwise direction of the groove 51C, a bottom 58C of the groove 51C forms an angle with the horizontal plane H in a state in which the predetermined angle is a maximum angle θmax. The maximum angle θmax is, for example, 25° as mentioned above. As illustrated in FIG. 17, in the vertical section along the lengthwise
direction of the groove 51C, the bottom 58C of the groove 51C forms an angle with the horizontal plane H in a state in which the predetermined angle is a minimum angle θmin. The minimum angle θmin is, for example, 21° as mentioned above. That is to say, in the vertical section along the lengthwise direction of the groove 51C, the bottom 58C of the groove 51C forms an angle with the horizontal plane H regardless of the predetermined angle.

The second angle θ2 is not necessarily 15°. 15° is merely an example of the second angle θ2. The maximum angle θmax is not necessarily 25°, which is merely an example of the maximum angle θmax. The minimum angle θmin is not necessarily 21°, which is merely an example of the minimum angle θmin.

As described above, the electric power steering device 80C includes the steering shaft 82 that rotates around the rotation axis R that forms the predetermined angle with the horizontal plane H, and the steering column 83 that supports the steering shaft 82. The steering column 83 is attached to the vehicle body in such a manner that the predetermined angle can be changed. The motor unit 1C is attached to the steering column 83. The lengthwise direction of the groove 51C is in line with the direction DR parallel to the rotation axis R. In the vertical section along the lengthwise direction of the groove 51C, the bottom 58C of the groove 51C forms an angle with the horizontal plane in a state in which the predetermined angle is the maximum angle θmax and in a state in which the predetermined angle is the minimum angle θmin.

As a result, foreign matter that has entered the groove 51C is led to the ends of the groove 51C regardless of the angle that the steering shaft 82 forms with the horizontal plane H. This makes the foreign matter hard to accumulate in the groove 51C.

In the electric power steering device 80C, the first cover 5C includes the first wall 52 that is disposed on the motor flange 21 side of the groove 51C, and the second wall 54 that is disposed on the control unit 3 side of the groove 51C and that is higher than the first wall 52.

As a result, even in a case in which the motor unit 1C is disposed so as to be tilted relative to a designed position, foreign matter in the groove 51C is hard to go beyond the second wall 54. As a result, the electric power steering device 80C is capable of further preventing foreign matter from coming into contact with the bus bars 4.

### Reference Signs List

- 1: motor unit
- 2: electric motor
- 20: motor case
- 21: motor flange
- 211: supporting part
- 23: terminal block
- 3: control unit
- 30: control unit case
- 33: connector
- 4: bus bar
- 5, 5A, 5B, 5C: first covers
- 51,: 51B grooves
- 52: first wall
- 521: edge
- 53: protrusion
- 54: second wall
- 541: edge
- 55: convex part
- 56: wall
- 58, 58C: bottoms
- 6: second cover
- 80, 80C: electric power steering devices
- 81: steering wheel
- 82: steering shaft
- 82a: input shaft
- 82B: output shaft
- 83: steering column
- 84: first universal joint
- 85: countershaft
- 86: second universal joint
- 87: pinion shaft
- 88: steering gear
- 88a: pinion
- 88b: rack
- 89: tie rod
- 92: reduction gear
- 94: torque sensor
- 95: vehicle speed sensor
- 98: ignition switch
- 99: power supply

## Claims

1. An electric power steering device (80, 80C) including a motor unit (1) comprising:
an electric motor (2) that includes a motor case (20) and a motor flange (21) disposed at one end of the motor case (20);
a control unit (3) that includes a control unit case (30) facing the motor case (20) and that is supported by the electric motor (2);
a bus bar (4) that projects from the motor flange (21) toward the control unit (3) and that connects the electric motor (2) and the control unit (3);
a first cover (5) that is attached to the electric motor (2) and that covers at least part of a surface on an upper side of the bus bar (4); and
a second cover (6) that is attached to the control unit case (30),
wherein
the first cover (5) includes a groove (51) that opens toward an upper side,
the second cover (6) overlaps with an upper side of the groove (51),
the first cover (5) is an insulator, and
the bus bar (4) and the first cover (5) are integrally formed,
**characterized in that** a bottom of the groove (51) is tilted in such a manner that an end of the groove (51) in a lengthwise direction is positioned on an underside of a center of the groove (51), and
**in that** the first cover (5) includes a first wall (52) that is disposed on a motor flange side of the groove (51) and a second wall (54) that is disposed on a control unit side of the groove (51) and that is higher than the first wall (52).

2. The electric power steering device (80, 80C) according to claim 1, wherein the first cover (5) includes a protrusion at the end of the groove (51), the protrusion projecting toward an underside.

3. The electric power steering device (80, 80C) according to claim 1 or 2, wherein a width of the groove (51) in a widthwise direction becomes narrower toward the upper side in at least part of the groove (51).

4. The electric power steering device (80, 80C) according to any one of claims 1 to 3, wherein a length of the first cover (5) in an arrangement direction in which a plurality of the bus bars (4) are arrayed is longer than a maximum distance from one of the bus bars (4) at one end to another one of the bus bars (4) at the other end in the arrangement direction.

5. The electric power steering device (80, 80C) according to any one of claims 1 to 4, wherein,
the control unit case (30) is formed of metal, and
the second cover (6) is an insulator and formed of a resin.

6. The electric power steering device (80, 80C) according to claim 1, further comprising:
a steering shaft (82) that rotates around a rotation axis that forms a predetermined angle with a horizontal plane; and
a steering column (83) that supports the steering shaft (82), wherein
the steering column (83) is attached to a vehicle body in such a manner that the predetermined angle can be changed,
the motor unit (1) is attached to the steering column (83),
the lengthwise direction of the groove (51) is along a direction parallel to the rotation axis, and
in a vertical section along the lengthwise direction of the groove (51), the bottom of the groove (51) forms an angle with the horizontal plane in a state in which the predetermined angle is a maximum angle and in a state in which the predetermined angle is a minimum angle.

## Patentansprüche

1. Elektrische Servolenkungseinrichtung (80, 80C), die eine Motoreinheit (1) enthält, die aufweist:
einen elektrischen Motor (2), der ein Motorgehäuse (20) und einen Motorflansch (21), der an einem Ende von dem Motorgehäuse (20) angeordnet ist, enthält;
eine Steuereinheit (3), die ein Steuereinheitsgehäuse (30), das dem Motorgehäuse (20) gegenüber ist, enthält, und das durch den elektrischen Motor (2) abgestützt wird;
eine Busschiene (4), die sich von dem Motorflansch (21) in Richtung der Steuereinheit (3) erstreckt, und die den elektrischen Motor (2) und die Steuereinheit (3) verbindet;
eine erste Abdeckung (5), die an den elektrischen Motor (2) angesetzt ist, und die zumindest einen Teil von einer Oberfläche auf einer oberen Seite von der Busschiene (4) abdeckt; und
eine zweite Abdeckung (6), die an das Steuereinheitsgehäuse (30) angesetzt ist,
wobei
die erste Abdeckung (5) eine Rille bzw. einen Graben (51) enthält, der sich in Richtung der oberen Seite öffnet,
die zweite Abdeckung (6) mit einer oberen Seite von der Rille bzw. dem Graben (51) überlappt,
die erste Abdeckung (5) ein Isolator ist, und
die Busschiene (4) und die erste Abdeckung (5) einstückig bzw. integral ausgebildet sind,
**dadurch gekennzeichnet, dass**
ein Boden von der Rille bzw. dem Graben (51) in einer solchen Weise geneigt ist, dass ein Ende von der Rille bzw. dem Graben (51) in einer Längserstreckungsrichtung auf einer Unterseite von einem Zentrum von der Rille bzw. dem Graben (51) positioniert ist, und
die erste Abdeckung (5) eine erste Wand (52), die auf einer Motorflansch-Seite von der Rille bzw. dem Graben (51) angeordnet ist, und eine zweite Wand (54), die auf einer Steuereinheit-Seite von der Rille bzw. dem Graben (51) angeordnet ist und die höher als die erste Wand (52) ist, enthält.

2. Elektrische Servolenkungseinrichtung (80, 80C) gemäß Anspruch 1, wobei die erste Abdeckung (5) einen Fortsatz an dem Ende von der Rille bzw. dem Graben (51) enthält, wobei der Fortsatz in Richtung einer Unterseite erstreckt ist.

3. Elektrische Servolenkungseinrichtung (80, 80C) gemäß Anspruch 1 oder 2, wobei eine Breite von dem Graben bzw. der Rille (51) in einer Richtung der Breite in Richtung der oberen Seite in zumindest einem Teil der Rille bzw. des Grabens (51) schmäler wird.

4. Elektrische Servolenkungseinrichtung (80, 80C) gemäß irgendeinem der Ansprüche 1 bis 3, wobei eine Länge von der ersten Abdeckung (5) in einer Anordnungsrichtung, in welcher mehrere Busschienen (4) angeordnet sind, länger als ein maximaler Abstand von einer der Busschienen (4) an einem Ende zu einer anderen der Busschienen (4) an dem anderen Ende in der Anordnungsrichtung ist.

5. Elektrische Servolenkungseinrichtung (80, 80C) gemäß irgendeinem der Ansprüche 1 bis 4, wobei
das Steuereinheitsgehäuse (30) aus Metall ausgebildet ist, und
die zweite Abdeckung (6) ein Isolator ist und aus einem Harz gebildet ist.

6. Elektrische Servolenkungseinrichtung (80, 80C) gemäß Anspruche 1, die ferner aufweist:
eine Steuerwelle (82), die um eine Rotationsachse rotiert, die einen vorbestimmten Winkel mit einer horizontalen Ebene bildet; und
eine Lenksäule (83), die die Steuerwelle (82) abstützt, wobei
die Lenksäule (83) an einen Fahrzeugkörper in einer solchen Weise angesetzt ist, dass der vorbestimmte Winkel geändert werden kann,
die Motoreinheit (1) ist an die Lenksäule (83) angesetzt,
die Längsrichtung von der Rille bzw. des Grabens (51) ist entlang einer Richtung parallel zu der Rotationsachse, und
in einem vertikalen Abschnitt entlang der Längsrichtung von der Rille bzw. des Grabens (51) bildet der Boden von der Rille bzw. des Grabens (51) einen Winkel mit der horizontalen Ebene in einem Zustand, in welchem der vorbestimmte Winkel ein maximaler Winkel ist und in einem Zustand, in welchem der vorbestimmte Winkel ein minimaler Winkel ist.

## Revendications

1. Dispositif de direction assistée électrique (80, 80C) comportant une unité moteur (1) comprenant :
un moteur électrique (2) qui comporte un carter de moteur (20) et une bride de moteur (21) placée à une extrémité du carter de moteur (20) ;
une unité de commande (3) qui comporte un boîtier pour unité de commande (30) en face du carter de moteur (20) et qui est supportée par le moteur électrique (2) ;
une barre omnibus (4) qui fait saillie depuis la bride de moteur (21) vers l'unité de commande (3) et qui connecte le moteur électrique (2) et l'unité de commande (3) ;
un premier couvercle (5) qui est fixé au moteur électrique (2) et qui couvre au moins une partie d'une surface sur un côté supérieur de la barre omnibus (4) ; et
un second couvercle (6) qui est fixé au boîtier pour unité de commande (30),
dans lequel
le premier couvercle (5) comprend un sillon (51) qui s'ouvre vers un côté supérieur,
le second couvercle (6) chevauche un côté supérieur du sillon (51),
la premier couvercle (5) est un isolant, et
la barre omnibus (4) et le premier couvercle (5) sont formés d'un seul tenant,
**caractérisé en ce qu'**un fond du sillon (51) est incliné de telle façon qu'une extrémité du sillon (51) dans le sens de la longueur est positionnée sur un côté inférieur d'un centre du sillon (51), et
**en ce que** le premier couvercle (5) comporte une première paroi (52) qui est placée sur un côté bride de moteur du sillon (51) et une seconde paroi (54) qui est placée sur un côté unité de commande du sillon (51) et qui est plus haute que la première paroi (52).

2. Dispositif de direction assistée électrique (80, 80C) selon la revendication 1, dans lequel le premier couvercle (5) comporte une saillie à l'extrémité du sillon (51), la saillie faisant saillie vers un côté inférieur.

3. Dispositif de direction assistée électrique (80, 80C) selon la revendication 1 ou 2, dans lequel une largeur du sillon (51) dans le sens de la largeur devient plus étroite vers le côté supérieur dans au moins une partie du sillon (51).

4. Dispositif de direction assistée électrique (80, 80C) selon l'une quelconque des revendications 1 à 3, dans lequel une longueur du premier couvercle (5) dans un sens de disposition dans lequel une pluralité des barres omnibus (4) sont disposées en réseau est plus longue qu'une distance maximale entre l'une des barres omnibus (4) à une extrémité et une autre des barres omnibus (4) à l'autre extrémité dans le sens de disposition.

5. Dispositif de direction assistée électrique (80, 80C) selon l'une quelconque des revendications 1 à 4, dans lequel,
le boîtier pour unité de commande (30) est constitué de métal, et
le second couvercle (6) est un isolant et constitué d'une résine.

6. Dispositif de direction assistée électrique (80, 80C) selon la revendication 1, comprenant en outre :
un arbre de direction (82) qui tourne autour d'un axe de rotation qui forme un angle prédéterminé avec un plan horizontal ; et
une colonne de direction (83) qui supporte l'arbre de direction (82), dans lequel
la colonne de direction (83) est fixée à une carrosserie de véhicule d'une telle façon que l'angle prédéterminé peut être modifié,
l'unité moteur (1) est fixée à la colonne de direction (83),
le sens de la longueur du sillon (51) suit une direction parallèle à l'axe de rotation, et
dans une section verticale suivant le sens de la longueur du sillon (51), le fond du sillon (51) forme un angle avec le plan horizontal dans un état dans lequel l'angle prédéterminé est un angle maximal et dans un état dans lequel l'angle prédéterminé est un angle minimal.
